# EUROPEAN PATENT APPLICATION

(11) **EP 4 840 296 A1**
(43) Date of publication of application: **18.11.2026**
(21) Application number: 25176428.8
(22) Date of filing: 14.05.2025
(51) Int. Cl.: A01G 23/00, G06T 7/60, G06T 7/62, G06V 10/82

(54) **COMPUTER-IMPLEMENTED METHOD FOR PROVIDING GEOMETRIC DATA**

(71) Applicant: EPSILON Kran GmbH., 5020 Salzburg (AT)
(72) Inventor: Beleznai, Csaba, 1210 Vienna (AT); Lochner, Florian, 5020 Salzburg (AT); Reisinger, Lukas, 1210 Vienna (AT); Uray, Georg, 5020 Salzburg (AT); Wimmer, Sebastian, 5020 Salzburg (AT)
(74) Representative: Torggler & Hofmann Patentanwälte - Innsbruck

(57) **Abstract**

Computer-implemented method for providing geometric data (1) of at least one tree log (2) during a lifting operation carried out by means of a lifting device (3) arranged on a vehicle (4), wherein the method comprises:
- capturing at least one image (5) of at least one log (2) during a lifting operation;
- using the at least one image (5) as at least one input parameter (6) for a neural network (7);
- determining geometric data (1) of the at least one log (2) via the neural network (7) based on the at least one image (5), wherein the geometric data (1) comprises at least one length and one diameter of the at least one log (2);
- storing determined geometric data (1) in an electronic memory (8);
- providing stored geometric data (1) so that it is available to an operator of the lifting device (3) or for further electronic processing.
The invention also concerns a corresponding system.

## Description

The present disclosure concerns a computer-implemented method for providing geometric data of at least one tree log during a lifting operation carried out by means of a lifting device arranged on a vehicle.

The disclosure further concerns a computer-implemented method for providing geometric data of a load in the form of logs during a lifting operation carried out by means of a lifting device arranged on a vehicle, wherein the lifting device during lifting operation lifts logs as load into or from a loading area of the vehicle.

The disclosure further concerns a computer-implemented method for providing geometric data of at least one log during a lifting operation carried out by means of a lifting device arranged on a vehicle and a load in the form of logs, wherein the lifting device during lifting operation lifts logs as a load into or from a loading area of the vehicle.

The disclosure further concerns a system for determining geometric data of at least one log during a lifting operation carried out by means of a lifting device arranged on a vehicle, in which tree logs as load are lifted into or away from a loading area of the vehicle.

### Background

For the transport of tree logs to a manufacturer, it is necessary to know not only the (timber or wood) quality but also the dimensions of the logs, as the billing and also the destination depend on this. In addition, it is often necessary to allocate the load quantitatively to the sources in the case collective transport of several clients.

For this purpose, the (timber or log) delivery is unloaded by the haulier and usually measured manually by the recipient, which is time-consuming and can be associated with measurement inaccuracies. In a few exceptional cases, the load is measured in an external measuring device using laser-supported automated measuring methods. Although the measurement results are more accurate than with manual measurement, reloading into the external device takes considerably longer.

Automated measuring methods, wherein the measuring device is attached to or on a vehicle, loading device or harvesting device, often have the following disadvantages:
impractical positioning of the measuring device, such that the entire object to be measured is not always in the field of view of the measuring device,
high number of measuring devices required for a measurement, some of which are aligned at different angles to the object to be measured,
the measuring devices are movably mounted, which reduces their durability,
the analysing device cannot distinguish between one and several objects,
the analysing functions are limited to one type of measurement,
there is no verification of the measurement data, and
the data is only stored locally and not forwarded to a database.

So far, partial loads can only be kept apart by labelling the individual logs. This procedure is not only time-consuming, but also prone to errors.

EP 3004795 A1 describes a method for measuring a tree log using a camera and laser-based measuring methods, whereby the camera is attached to a wood processing machine. A point cloud of the input data is analysed, and various output data is calculated from it.

However, the device according to EP 3004795 A1 does not allow the load to be measured on a loading area, as the camera is not moved during the lifting process.

### Summary of the Disclosure

An object of the disclosure is to provide an improved method for providing geometric data of at least one of a tree log or a load on a loading area during a lifting operation, which avoids the problems of the prior art devices at least partially, as well as a system for determining geometric data of at least one log during a lifting operation carrying out such a method.

This object is achieved, in a first variant, by a method having the features of claim 1.

A computer-implemented method of the first variant for providing geometric data of at least one tree log during a lifting operation carried out by means of a lifting device arranged on a vehicle, comprises:
capturing at least one image of at least one log during a lifting operation;
using the at least one image as at least one input parameter for a neural network;
determining geometric data of the at least one log via the neural network based on the at least one image, wherein the geometric data comprises at least one length and one diameter of the at least one log;
storing determined geometric data in an electronic memory;
providing stored geometric data so that it is available to an operator of the lifting device or for further electronic processing;

Due to the execution of the method during a lifting operation of the log the loading procedure does not have to be interrupted by the need of placing the log within a separate measuring unit and thus time can be saved.

A further benefit is the reduction of hardware, since only one image can be used as an input parameter for the neural network.

Beneficial about the use of a neural network to determine the geometric data is that all algorithmic components can be directly learned from training data, thus time-consuming manual programming of the individual processing stages can be avoided and the determination of geometrical data can be optimized for logs.

Moreover, the stored geometric data can be used for further processing or fine-tuning of the weight functions of the neural network.

In a second variant the object is achieved by a computer-implemented method for providing geometric data of a load in the form of logs during a lifting operation carried out by means of a lifting device arranged on a vehicle, having the following features:
capturing at least one image of the loading area;
using the at least one image as at least one input parameter for a neural network;
determining geometric data of the load on the basis of the at least one image made by the neural network, wherein the geometric data comprises at least one volume of the load;
storing determined geometric data in an electronic memory;
providing stored geometric data so that it is available to an operator of the lifting device or for further electronic processing.

The second variant offers the same benefits as the first variant but for a load in the form of logs.

In a third variant the object is achieved by a computer-implemented method for providing geometric data of at least one log during a lifting operation carried out by means of a lifting device arranged on a vehicle and a load in the form of logs, wherein the lifting device during lifting operation lifts logs as a load into or from a loading area of the vehicle, wherein the method comprises:
determining geometric data of at least one log by:
   capturing at least one image of at least one log during a lifting operation,
   using the at least one image as at least one input parameter for a neural network,
   determining geometric data of the at least one log via the neural network based on the at least one image, wherein the geometric data comprise at least one length and one diameter of the at least one log,
   storing determined geometric data in an electronic memory;
providing stored geometric data so that it is available to an operator of the lifting device or for further electronic processing;
determining geometric data of a load by:
   capturing at least one image of the loading area, using the at least one image as at least one input parameter for a neural network,
   determining geometric data of the load via the neural network based on the at least one image, wherein the geometric data comprises at least one volume of the load,
   storing determined geometric data in an electronic memory;
providing stored geometric data so that it is available to an operator of the lifting device or for further electronic processing.

The third aspect of the disclosure combines the benefits of the first and second variant, such that the determination of geometrical data can be optimized for logs and a load of logs, thus offering the ability of an improved distinguishment between one and several objects.

In other words one method can be used to determine geometric data of at least one log as well as a load of logs.

Embodiments are defined in the dependent claims.

### Brief Description of the Drawings

Further details and advantages of preferred embodiments of the disclosure are explained in more detail below with reference to the drawings. There are shown in:
- Fig. 1: a flow chart of an embodiment of a first, second or third variant of a method according to the disclosure;
- Fig. 2: a flow chart of an optimization operation according to an embodiment of the first variant of a method according to the disclosure;
- Fig. 3: a schematic representation of an embodiment of a system according to the disclosure;
- Fig. 4: a schematic representation of a gripper of a lifting device;
- Fig. 5: a schematic representation of a vehicle with a lifting device and an embodiment of a system according to the disclosure;
- Fig. 6: a schematic representation of a loading area for tree logs;

### Detailed Description

In a preferred embodiment of the first aspect of the disclosure the method is carried out during each lifting operation.

In this way, geometric data 1 of each lifted log can be determined.

In a preferred embodiment of the first aspect of the disclosure the neural network 7 determines a three-dimensional representation of the at least one log by means of a depth estimation based on the at least one image 5.

The depth information is an integral part of the at least one image 5. Using this information to create a three-dimensional representation of the log shown on the picture can avoid the complex process of creating a point-cloud and overlaying it with a mask of the respective log, thus saving CPU-time and avoid algorithm specific problems of individual method steps.

For depth estimation based on at least one image 5 there are several possibilities known from the state of the art. In general, these can be grouped into two main categories: multi-view stereo and monocular depth estimation.

In a preferred embodiment of the first aspect of the disclosure a wood quality of the at least one log is evaluated based on a geometric shape of the log and at least one optical feature of the at least one log, wherein the geometric shape of the at least one log is determined from the three-dimensional representation, and wherein the at least one optical feature of the at least one log is determined based on the at least one image 5.

The optical feature can be for example at least one of the following: a cutting surface of the log, a bark texture of the log, discolouration due to fungal infestation, etc.

This means that the logs can be categorised into quality classes during loading and this information can be passed on to a potential buyer in advance.

In a preferred embodiment of the first aspect of the disclosure the method further comprises an optimization operation, wherein the optimization operation uses at least one opening angle 9 of at least one gripper jaw 11 of the lifting device 3 and the determined diameter of the at least one log as input parameter 6 for an optimization process 12 for determining an optimized diameter 28 of the at least one log.

Beneficial about this embodiment is that the via the neural network 7 determined geometric data 1 can be verified using classical measurement devices. Furthermore, the data collected using classical measurement devices can be used to optimize the neural network 7 by adjusting the according weigh functions.

In a particular preferred embodiment of the first aspect of the disclosure the opening angle 9 and the determined diameter of the at least one log are used as input parameters 6 for a further neural network 13 and wherein the further neural network 13 determines an optimized diameter 28 of the at least one log on the basis of the input parameters 6.

In a preferred embodiment of the second aspect of the disclosure the method is carried out several times.

In a particular preferred embodiment of the second aspect of the disclosure, the method is carried out each after a predetermined number of lifting operations.

Thus, the volume of the load 14 is not determined within each lifting operation, since the volume will not change drastically anyway after a single lifting operation, hence saving computing workload.

In a preferred embodiment of the third aspect of the disclosure the providing of geometric data 1 of at least one log is carried out during each lifting operation and the providing of geometric data 1 of a load 14 is carried out each after a predetermined number of lifting operations.

In a preferred embodiment of the third aspect of the disclosure a computing unit 16 based on the determined geometric data 1 calculates at least one suggestion for an ideal arrangement of the at least one log on the loading area 15 and provides this information so that it is available for an operator of the lifting device 3 or for further electronic processing.

This feature comes in particular handy in the case of an at least partially automated lifting operation. An operator does not need to evaluate the optimal position of the log on the loading area 15 himself, which can be quite complex and in time exhausting task, since the stability of the load 14 on the loading area 15 is essential for further transportation or continuous storage.

In a preferred embodiment of the third aspect of the disclosure weight of the at least one log is determined by means of a sensor 17 on the lifting device 3 or the loading area 15, and wherein wood density of the at least one log is determined based on the weight and the geometric data 1 of the at least one log.

The wood density can used as a further input parameter 6 for a quality assessment of the log, alongside the geometrical data and the at least one optical feature.

In a preferred embodiment of the third aspect of the disclosure there are at least two loading areas 15 and a computing unit 16 based on the determined geometric data 1 selects one of the loading areas 15 for depositing the at least one log and provides this information so that it is available for at least one of the following, an operator of the lifting device 3 or for further electronic processing.

Thus, the logs can be sorted based on order characteristics of purchasers, quality levels of the logs etc.

In a preferred embodiment of the first, second or third aspect of the disclosure the image 5 contains depth information, which can be used for depth estimation and subsequently object recognition and data exploitation.

In a preferred embodiment of the first, second or third aspect of the disclosure the image 5 is used as the sole input parameter 6 for the neural network 7.

This allows for particularly simple setup of the hardware, which can prevent a break-down of the method in the case one of damage of at least one component of the lifting device 3 used for capturing of input data for a method according to at least one aspect of the disclosure.

In a preferred embodiment of the first, second or third aspect of the disclosure during further electronic processing, stored geometric data 1 or data derived therefrom is sent by means of an e-mail service or sent to a cloud 19.

In this way information about at least one of the following at least one log or at least one load 14 can almost instantly be provided to a user, trader, processing system, etc., that is spatially distanced from the lifting device 3.

In a preferred embodiment of the first, second or third aspect of the disclosure the determined data is stored in a database 20.

In a preferred embodiment of the third aspect of the disclosure:
the determination of geometric data 1 of at least one log is carried out during each lifting operation;
the determination of geometric data 1 of a load 14 is carried out each after a predetermined number of lifting operations.
the at least one image 5 carried out each after a predetermined number of lifting operations and the neural network 7 determines a three-dimensional representation of the at least one log by means of a depth estimation based on the at least one image 5;
a wood quality of the at least one log is evaluated based on a geometric shape of the log and at least one optical feature of the at least one log, wherein the geometric shape of the at least one log is determined from the three-dimensional representation, and wherein the at least one optical feature of the at least one log is determined based on the at least one image 5;
the method further comprises an optimization operation, wherein the optimization operation uses at least one opening angle 9 of at least one gripper jaw 11 of the lifting device 3 and the determined diameter of the at least one log as input parameter 6 for an optimization process 12 for determining an optimized diameter 28 of the at least one log;
a computing unit 16 based on the determined geometric data 1 calculates at least one suggestion for an ideal arrangement of the at least one log on the loading area 15 and provides this information so that it is available for an operator of the lifting device 3 or for further electronic processing;
weight of the at least one log is determined by means of a sensor 17 on the lifting device 3 or the loading area 15, and wherein wood density of the at least one log is determined based on the weight and the geometric data 1 of the at least one log; and
the determined data is stored in a database 20.

Protection is also sought after for a system for determining geometric data 21 of at least one log during a lifting operation carried out by means of a lifting device 3 arranged on a vehicle 4, in which tree logs 2 as load 14 are lifted into or away from a loading area 15 of the vehicle 4, wherein the system comprises:
an optical system 22 for capturing images 5, which is arranged in such a way that it can capture both an image 5 of at least one log located on the lifting device 3 and an image 5 of the load 14 located in the loading area 15 of the vehicle 4;
a neural network 7 which is configured to determine geometric data 1 of the at least one log and/or load 14 on the basis of images 5 captured by the optical system 22;
a storage device 23 configured to store the determined geometric data 1;
a providing device 24 for providing stored geometric data 1 determined by the neural network 7 so that it is available for at least one of the following, an operator of the lifting device 3 or for further electronic processing.

Preferably the optical system 22 comprises at least one of the following a camera, stereo camera or LIDAR.

In a preferred embodiment of the system a receiving unit 25 is additionally provided to receive data from at least one of the following, an external system 26 or sensor 17.

This data can be for example an opening angle 9 of a gripper jaw 11, a humidity measured by a humidity sensor, a pressure measured by a pressure sensor, details on the owner of the timber etc.

In a preferred embodiment of the system a transmission unit 27 is additionally provided in order to transmit the provided data to at least one external system 26 or at least one database 20.

The transmission of data via the transmission unit 27 can be wireless or wired.

In a preferred embodiment the system determines geometric data 1 of at least one log during a lifting operation according to a method having the features of an embodiment of at least one of the first, second or third variant of the disclosure.

Protection is also sought after for a lifting device 3 comprising a system for determining geometric data 21 of at least one log during a lifting operation according to the disclosure.

Protection is also sought after for a vehicle 4, wherein the vehicle 4 has a loading area 15 and a lifting device 3 according to the disclosure.

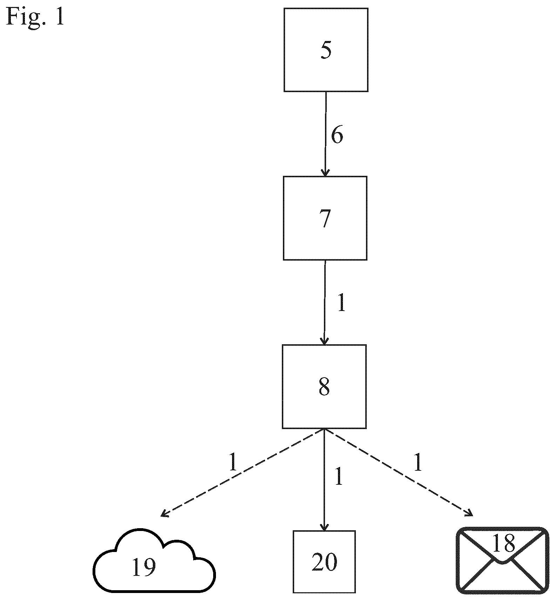

Fig. 1 shows a flow chart of an embodiment of a first, second or third variant of a method according to the disclosure.

At least one image 5 of at least one of the following at least one log 2 or a load 14 is captured during a lifting operation. The image 5 is then forwarded as at least one input parameter 6 to a neural network 7. The neural network 7 determines geometric data 1 of at least one of the following the at least one log 2 or the load 14. The geometric data 1 comprises in the case the image 5 shows a log 2 at least one length and one diameter of the at least one log 2, and in the case the image 5 shows a load 14 the geometric data 1 comprises at least a volume of the load 14.

The determined geometric data 1 is then stored in an electronic memory 8. The electronic memory 8 can be transitory or non-transitory.

According to Fig.1 the stored geometric data 1 is subsequently provided to an operator via at least one of the following: a database 20, an e-mail service 18, or a cloud 19.

The different line styles shall visualize the possibility of sending the geometric data 1 via wired or wireless transmission. More precisely, in Fig.1 geometric data 1 is transmitted wirelessly from the electronic memory 8 via an e-mail service 18 and to a cloud 19, while the geometric data 1 is provided via wired transmission to the database 20.

The method shown in Fig.1 can be carried out during each lifting operation or each after a predetermined number of lifting operations.

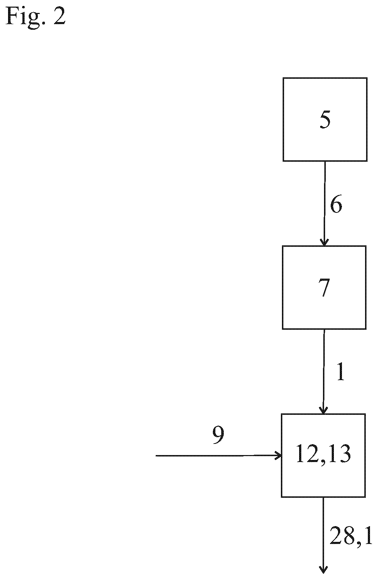

Fig.2 shows a flow chart of an optimization operation according to an embodiment of the first variant of a method according to the disclosure.

In a first step geometric data 1 of the at least one log 2 is determined via the neural network 7 based on the at least one image 5, wherein the geometric data 1 comprises at least one length and one diameter of the at least one log 2.

Afterwards, according to the embodiment of Fig.2, an optimization operation is performed. To this end the determined geometric data 1 serves as input parameter 6 together with an opening angle 9 of a gripper jaw 11 of a lifting device 3 for an optimization process 12.

This optimization process 12 can be in form of a classical algorithm or a deep learning algorithm, particularly a further neural network 13. Note, that under classical algorithm any algorithm that is not based on deep learning is to be understood.

The optimization process 12 outputs an optimized diameter 28 of the at least one log 2 and in the case the geometric data 1 included more than a diameter of the log, also a remaining - non-optimized- geometric data 1 is outputted.

The outputted data 28,1 can subsequently be stored in an electronic memory 8 and/or sent to a database 20, a cloud 19 or via an e-mail service 18 analogously to Fig.1.

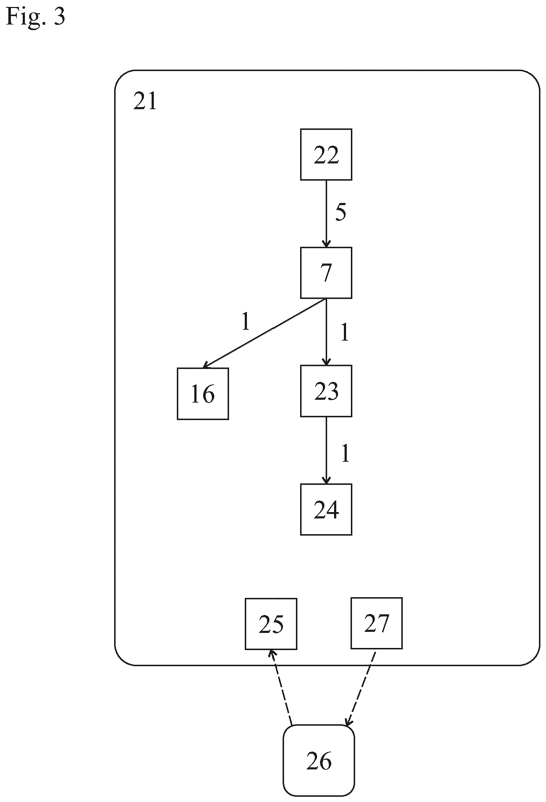

Fig. 3 shows a schematic representation of an embodiment of a system 21 according to the disclosure.

The system 21 according to Fig.3 comprises:
an optical system 22 for capturing images 5, which is arranged in such a way that it can capture both an image 5 of at least one log 2 located on the lifting device 3 and an image 5 of the load 14 located in the loading area 15 of a vehicle 4;
a neural network 7 which is configured to determine geometric data 1 of the at least one log 2 and/or load 14 on the basis of images 5 captured by the optical system 22;
a storage device 23 configured to store the determined geometric data 1;
a providing device 24 for providing stored geometric data 1 determined by the neural network 7 so that it is available for at least one of the following, an operator of the lifting device 3 or for further electronic processing.

The system 21 according to Fig.3 further comprises a computing unit 16 configured to calculate based on the determined geometric data 1 at least one suggestion for an ideal arrangement of the at least one log 2 on the loading area 15 and provide this information so that it is available for an operator of the lifting device 3 or for further electronic processing.

Moreover, the embodiment of the system 21 according to Fig.3 comprises:
a receiving unit 25 configured to receive data from at least one of the following, an external system 26 or sensor 17;
a transmission unit 27 configured to transmit data to at least one external system 26.

The receiving unit 25 and the transmission unit 27 are pictured separately in Fig.3 but can also be realised as a single component of the system 21.

Analogously to Fig.1, the line style in Fig.3 was chosen accordingly to visualize wired and/or wireless transmission of data.

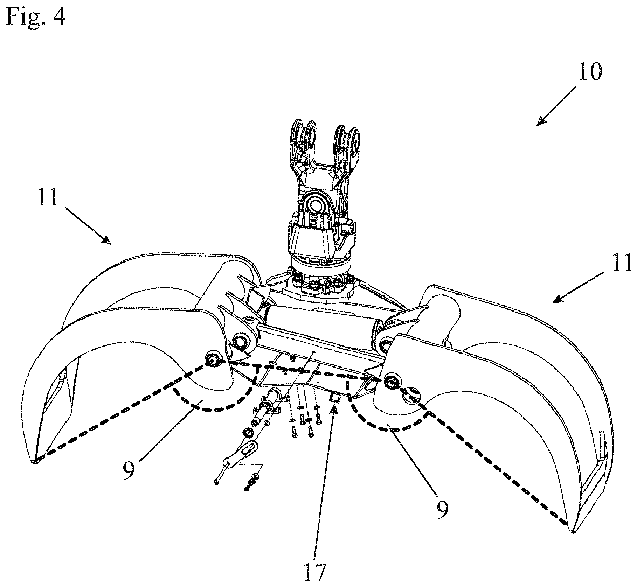

Fig.4 shows a schematic representation of a gripper 10 of a lifting device 3.

The gripper 10 according to Fig.4 comprises two gripping jaws 11, which each can be positioned at a gripping angle 9 relative to a closing position of the gripper 10, wherein the gripper jaws 11 contact each other partially.

The gripper 10 according to Fig.4 is removably attachable to the lifting device 3 via an articulated joint.

The gripper 10 furthermore comprises at least one sensor 17, wherein the sensor 17 can for example measure an opening angle 9 of at least one gripper jaw 11.

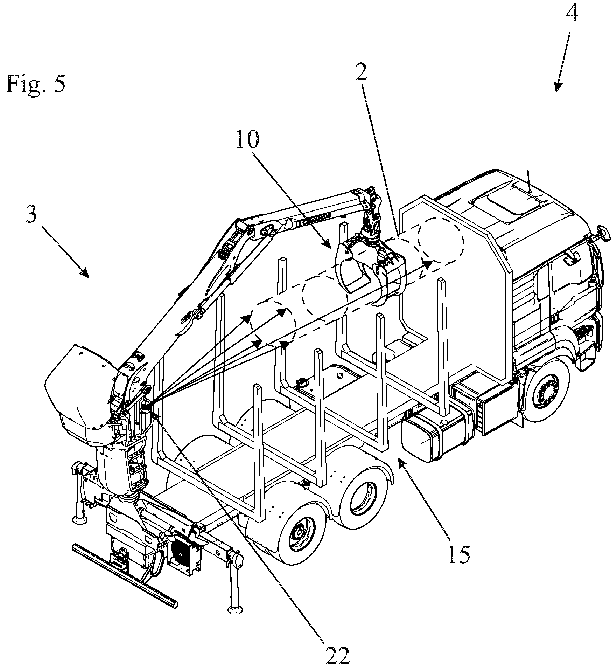

Fig. 5 shows a schematic representation of a vehicle 4 with a lifting device 3 and a gripper 10 according to Fig.4 as well as an embodiment of a system 21 according to Fig.3.

The vehicle 4 according to Fig.4 is a truck (or LGV i.e. large goods vehicle) with an integrated loading area 15 for tree logs 2 comprising a set of pairwise stanchions.

The lifting device 3 is located at the very end of the truck 4 and comprises a pilar and two levers, which are jointly connected. At the tip of the second lever the gripper 10 is preferably removable attached and holds a tree log 2.

Both the log 2 and the loading area 15 are within a field of view of the optical system 22 at least at one point during the lifting operation.

In the case, the optical system 22 comprises a LIDAR, laser beams are emitted and reflected by the log 2. A time for the reflected laser beams to return to a receiver of the LIDAR is measured and a distance between the LIDAR and the log 2 is calculated based on this time. The measured distance can be used as depth information for an image 5 captured by a camera comprised by the optical system 22.

The loading area 15 can furthermore comprise at least one sensor 17 to determine a weight of a load 14 within the loading area 15.

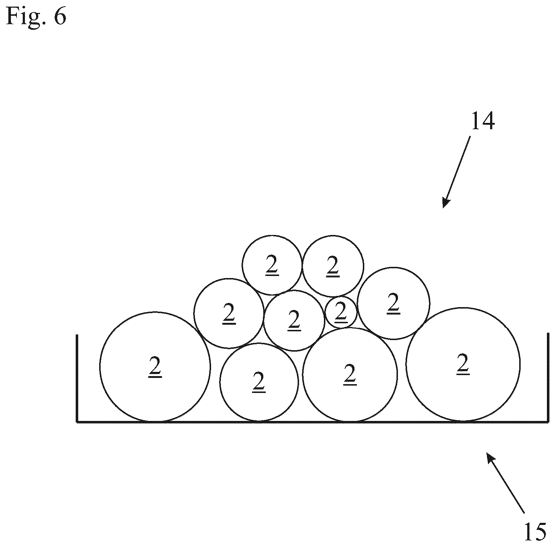

Fig. 6 shows a schematic representation of a loading area 15 for tree logs.

The computing unit 16 according to Fig.3 can based on the determined geometric data 1 calculate at least one suggestion for an ideal arrangement of at least one log 2 on the loading area 15 and provide this information so that it is available for an operator of the lifting device 3 or for further electronic processing.

An ideal arrangement of the logs 2 can consider a stability of the load 14.

The examples described herein may be summarized as follows:

A first variant (e.g. example 1) relates to a computer-implemented method for providing geometric data 1 of at least one tree log 2 during a lifting operation carried out by means of a lifting device 3 arranged on a vehicle 4, wherein the method comprises:
capturing at least one image 5 of at least one log 2 during a lifting operation;
using the at least one image 5 as at least one input parameter 6 for a neural network 7;
determining geometric data 1 of the at least one log 2 via the neural network 7 based on the at least one image 5, wherein the geometric data 1 comprises at least one length and one diameter of the at least one log 2;
storing determined geometric data 1 in an electronic memory 8;
providing stored geometric data 1 so that it is available to an operator of the lifting device 3 or for further electronic processing.

An example (e.g. example 2) of the first variant relates to example 1, wherein the method is carried out during each lifting operation.

Another example (e.g. example 3) relates to at least one of the example 1 or example 2, wherein the neural network 7 determines a three-dimensional representation of the at least one log 2 by means of a depth estimation based on the at least one image 5.

Another example (e.g. example 4) relates to any one of examples 1 to 3, wherein a wood quality of the at least one log 2 is evaluated based on a geometric shape of the log 2 and at least one optical feature of the at least one log 2, wherein the geometric shape of the at least one log 2 is determined from the three-dimensional representation, and wherein the at least one optical feature of the at least one log 2 is determined based on the at least one image 5.

Another example (e.g. example 5) relates to any one of examples 1 to 4, wherein the method further comprises an optimization operation, wherein the optimization operation uses at least one opening angle 9 of at least one gripper jaw 11 of the lifting device 3 and the determined diameter of the at least one log 2 as input parameter 6 for an optimization process 12 for determining an optimized diameter 28 of the at least one log 2.

Another example (e.g. example 6) relates to any one of examples 1 to 5, wherein at least the opening angle 9 and the determined diameter of the at least one log 2 are used as input parameters 6 for a further neural network 13 and wherein the further neural network 13 determines an optimized diameter 28 of the at least one log 2 on the basis of the input parameters 6.

A second variant (e.g. example 7) relates to a computer-implemented method for providing geometric data 1 of a load 14 in the form of logs 2 during a lifting operation carried out by means of a lifting device 3 arranged on a vehicle 4, wherein the lifting device 3 during lifting operation lifts logs 2 as load 14 into or from a loading area 15 of the vehicle 4, wherein the method comprises:
capturing at least one image 5 of the loading area 15;
using the at least one image 5 as at least one input parameter 6 for a neural network 7;
determining geometric data 1 of the load 14 on the basis of the at least one image 5 made by the neural network 7, wherein the geometric data 1 comprises at least one volume of the load 14;
storing determined geometric data 1 in an electronic memory 8;
providing stored geometric data 1 so that it is available to an operator of the lifting device 3 or for further electronic processing.

An example (e.g. example 8) of the second variant relates to example 7, wherein the method is carried out several times.

Another example (e.g. example 9) relates to example 8, wherein the method is carried out each after a predetermined number of lifting operations.

A third variant (e.g. example 7) relates to a computer-implemented method for providing geometric data 1 of at least one log 2 during a lifting operation carried out by means of a lifting device 3 arranged on a vehicle 4 and a load 14 in the form of logs 2, wherein the lifting device 3 during lifting operation lifts logs 2 as a load 14 into or from a loading area 15 of the vehicle 4, wherein the method comprises:
determining geometric data 1 of at least one log 2 by:
   capturing at least one image 5 of at least one log 2 during a lifting operation,
   using the at least one image 5 as at least one input parameter 6 for a neural network 7,
   determining geometric data 1 of the at least one log 2 via the neural network 7 based on the at least one image 5, wherein the geometric data 1 comprise at least one length and one diameter of the at least one log 2, storing determined geometric data 1 in an electronic memory 8;
providing stored geometric data 1 so that it is available to an operator of the lifting device 3 or for further electronic processing;
determining geometric data 1 of a load 14 by:
   capturing at least one image 5 of the loading area 15, using the at least one image 5 as at least one input parameter 6 for a neural network 7,
   determining geometric data 1 of the load 14 via the neural network 7 based on the at least one image 5, wherein the geometric data 1 comprises at least one volume of the load 14,
   storing determined geometric data 1 in an electronic memory 8;
providing stored geometric data 1 so that it is available to an operator of the lifting device 3 or for further electronic processing.

An example (e.g. example 11) of the third variant relates to example 10, wherein the providing of geometric data 1 of at least one log 2 is carried out during each lifting operation and the providing of geometric data 1 of a load 14 is carried out each after a predetermined number of lifting operations.

Another example (e.g. example 12) relates to one of the claims 10 or 11, wherein a computing unit 16 based on the determined geometric data 1 calculates at least one suggestion for an ideal arrangement of the at least one log 2 on the loading area 15 and provides this information so that it is available for an operator of the lifting device 3 or for further electronic processing.

Another example (e.g. example 13) relates to any one of the examples 10 to 12, wherein weight of the at least one log 2 is determined by means of a sensor 17 on the lifting device 3 or the loading area 15, and wherein wood density of the at least one log 2 is determined based on the weight and the geometric data 1 of the at least one log 2.

Another example (e.g. example 14) relates to any one of the examples 10 to 13, wherein, in the case of at least two loading areas 15, a computing unit 16 based on the determined geometric data 1 selects a loading area 15 for depositing the at least one log 2 and provides this information so that it is available for at least one of the following, an operator of the lifting device 3 or for further electronic processing.

Another example (e.g. example 15) relates to any one of the examples 1 to 14, wherein the image 5 contains depth information.

Another example (e.g. example 16) relates to any one of the examples 1 to 15, wherein the image 5 is used as the sole input parameter 6 for the neural network 7.

Another example (e.g. example 17) relates to any one of the examples 1 to 16, wherein during further electronic processing, stored geometric data 1 or data derived therefrom is sent by means of an e-mail service 18 or sent to a cloud 19.

Another example (e.g. example 18) relates to any one of the examples 1 to 18, wherein the determined data is stored in a database 20.

An example (e.g. example 19) relates to a system for determining geometric data 21 of at least one tree log 2 during a lifting operation carried out by means of a lifting device 3 arranged on a vehicle 4, in which logs 2 as load 14 are lifted into or away from a loading area 15 of the vehicle 4, wherein the system 21 comprises:
an optical system 22 for capturing images 5, which is arranged in such a way that it can capture both an image 5 of at least one log 2 located on the lifting device 3 and an image 5 of the load 14 located in the loading area 15 of the vehicle 4;
a neural network 7 which is configured to determine geometric data 1 of the at least one log 2 and/or load 14 on the basis of images 5 captured by the optical system 22;
a storage device 23 configured to store the determined geometric data 1;
a providing device 24 for providing stored geometric data 1determined by the neural network 7 so that it is available for at least one of the following, an operator of the lifting device 3 or for further electronic processing.

An example (e.g. example 20) of the system 21 relates to example 19, wherein a receiving unit 25 is additionally provided to receive data from at least one of the following, an external system 26 or sensor 17.

Another example (e.g. example 21) of the system 21 relates to example 20, wherein a transmission unit 27 is additionally provided in order to transmit the provided data to at least one external system 26 or at least one database 20.

An example (e.g. example 22) relates to a lifting device 3 comprising a system according to one of examples 19 to 21.

An example (e.g. example 23) relates to a vehicle 4 comprising a loading area 15 and a lifting device 3 according to example 22.

### List of reference signs:

- 1: geometric data
- 2: tree log
- 3: lifting device
- 4: vehicle
- 5: image
- 6: input parameter
- 7: neural network
- 8: electronic memory
- 9: opening angle
- 10: gripper
- 11: gripper jaw
- 12: optimization process
- 13: further neural network
- 14: load
- 15: loading area
- 16: computing unit
- 17: sensor
- 18: e-mail service
- 19: cloud
- 20: database
- 21: system for determining geometric data
- 22: optical system
- 23: storage device
- 24: providing device
- 25: receiving unit
- 26: external system
- 27: transmission unit
- 28: optimized diameter

## Claims

1. Computer-implemented method for providing geometric data (1) of at least one tree log (2) during a lifting operation carried out by means of a lifting device (3) arranged on a vehicle (4), wherein the method comprises:
capturing at least one image (5) of at least one log (2) during a lifting operation;
using the at least one image (5) as at least one input parameter (6) for a neural network (7);
determining geometric data (1) of the at least one log (2) via the neural network (7) based on the at least one image (5), wherein the geometric data (1) comprises at least one length and one diameter of the at least one log (2);
storing determined geometric data (1) in an electronic memory (8);
providing stored geometric data (1) so that it is available to an operator of the lifting device (3) or for further electronic processing.

2. Method according to the preceding claim, wherein the method is carried out during each lifting operation.

3. Method according to one of the preceding claims, wherein the neural network (7) determines a three-dimensional representation of the at least one log (2) by means of a depth estimation based on the at least one image (5).

4. Method according to the preceding claim, wherein a wood quality of the at least one log (2) is evaluated based on a geometric shape of the log (2) and at least one optical feature of the at least one log (2), wherein the geometric shape of the at least one log (2) is determined from the three-dimensional representation, and wherein the at least one optical feature of the at least one log (2) is determined based on the at least one image (5).

5. Method according to one of the preceding claims, wherein the method further comprises an optimization operation, wherein the optimization operation uses at least one opening angle (9) of at least one gripper jaw (11) of the lifting device (3) and the determined diameter of the at least one log (2) as input parameter for an optimization process (12) for determining an optimized diameter (28) of the at least one log (2).

6. Computer-implemented method, according to one of the preceding claims, for providing geometric data (1) of a load (14) in the form of logs (2) during a lifting operation carried out by means of a lifting device (3) arranged on a vehicle (4), wherein the lifting device (3) during lifting operation lifts logs (2) as load (14) into or from a loading area (15) of the vehicle (4), wherein the method comprises:
capturing at least one image (5) of the loading area (15) ;
using the at least one image (5) as at least one input parameter (6) for a neural network (7);
determining geometric data (1) of the load (14) on the basis of the at least one image (5) made by the neural network (7), wherein the geometric data (1) comprises at least one volume of the load (14);
storing determined geometric data (1) in an electronic memory (8);
providing stored geometric data (1) so that it is available to an operator of the lifting device (3) or for further electronic processing.

7. Method according to the preceding claim, wherein the method is carried out several times.

8. Computer-implemented method, according to one of the preceding claims, for providing geometric data (1) of at least one log (2) during a lifting operation carried out by means of a lifting device (3) arranged on a vehicle (4) and a load (14) in the form of logs (2), wherein the lifting device (3) during lifting operation lifts logs (2) as a load (14) into or from a loading area (15) of the vehicle (4), wherein the method comprises:
determining geometric data (1) of at least one log (2) by:
capturing at least one image (5) of at least one log (2) during a lifting operation,
using the at least one image (5) as at least one input parameter (6) for a neural network (7),
determining geometric data (1) of the at least one log (2) via the neural network (7) based on the at least one image (5), wherein the geometric data (1) comprise at least one length and one diameter of the at least one log (2),
storing determined geometric data (1) in an electronic memory (8);
providing stored geometric data (1) so that it is available to an operator of the lifting device (3) or for further electronic processing;
determining geometric data (1) of a load (14) by:
capturing at least one image (5) of the loading area (15),
using the at least one image (5) as at least one input parameter (6) for a neural network (7),
determining geometric data (1) of the load (14) via the neural network (7) based on the at least one image (5), wherein the geometric data (1) comprises at least one volume of the load (14),
storing determined geometric data (1) in an electronic memory (8);
providing stored geometric data (1) so that it is available to an operator of the lifting device (3) or for further electronic processing.

9. Method according to the preceding claim, wherein a computing unit (16) based on the determined geometric data (1) calculates at least one suggestion for an ideal arrangement of the at least one log (2) on the loading area (15) and provides this information so that it is available for an operator of the lifting device (3) or for further electronic processing.

10. Method according to one of claims 8 or 9, wherein weight of the at least one log (2) is determined by means of a sensor (17) on the lifting device (3) or the loading area (15), and wherein wood density of the at least one log (2) is determined based on the weight and the geometric data (1) of the at least one log (2).

11. Method according to one of the preceding claims, wherein during further electronic processing, stored geometric data (1) or data derived therefrom is sent by means of an e-mail service (18) or sent to a cloud (19).

12. System (21) for determining geometric data (1) of at least one tree log (2) during a lifting operation carried out by means of a lifting device (3) arranged on a vehicle (4), in which logs (2) as load (14) are lifted into or away from a loading area (15) of the vehicle (4), wherein the system (21) comprises:
an optical system (22) for capturing images (5), which is arranged in such a way that it can capture both an image (5) of at least one log (2) located on the lifting device (3) and an image (5) of the load (14) located in the loading area (15) of the vehicle (4);
a neural network (7) which is configured to determine geometric data (1) of the at least one log (2) and/or load (14) on the basis of images (5) captured by the optical system (22);
a storage device (23) configured to store the determined geometric data (1);
a providing device (24) for providing stored geometric data (1) determined by the neural network (7) so that it is available for at least one of the following, an operator of the lifting device (3) or for further electronic processing.

13. System (21) according to the preceding claim, wherein a transmission unit (27) is additionally provided in order to transmit the provided data to at least one external system (26) or at least one database (20).

14. Lifting device (3) comprising a system (21) according to at least one of claims 12 or 13.

15. Vehicle (4), wherein the vehicle (4) has a loading area (15) and a lifting device (3) according to the preceding claim.
